# EUROPÄISCHE PATENTANMELDUNG

(11) **EP 1 790 453 A1**
(43) Veröffentlichungstag der Anmeldung: **30.05.2007**
(21) Anmeldenummer: 05025593.4
(22) Anmeldetag: 23.11.2005
(51) Int. Cl.: B29C 45/14, F02M 37/00, B60K 15/01

(54) **Spritzwerkzeug zur Herstellung eines Rücklaufrohres**

(71) Anmelder: HTP Liebscher Kunststofftechnik GmbH & Co. KG, 82064 Strasslach (DE)
(72) Erfinder: Metzler, Richard, 82041 München (DE)
(74) Vertreter: Köster, Hajo

(57) **Zusammenfassung**

Bereitgestellt wird ein Spritzwerkzeug zur Herstellung eines Rücklaufrohres (20), insbesondere für Kraftstoff-Einspritzpumpen, aus einer durch Spritzen hergestellten Ummantelung auf einem metallenen Innenrohr (21) mit insbesondere kreisförmigem Durchmesser, das aus zwei geraden Schenkeln (22, 23) und einem diese Schenkel verbindenden Winkelabschnitt (24) aufgebaut ist und an den freien Enden (25, 26) der geraden Schenkel (22, 23) nicht umspritzt ist, wobei das Spritzwerkzeug eine formgebende Höhlung (3) mit zwei Schenkelbereichen (4, 5) zur Aufnahme der zu umspritzenden Schenkel (22, 23) des Innenrohres (21) und einen diese Schenkelbereiche verbindenden Winkelbereich (6) zur Aufnahme des zu umspritzenden Winkelabschnitts (24) des Innenrohres (21) aufweist, aus mindestens zwei Teilen aufgebaut ist, zwischen denen im Bereich des Höhlung (3) eine Trennebene (2) verläuft, die mit der von dem Innenrohr (21) im eingelegten Zustand aufgespannten, mittig durch die Schenkel (22, 23) und den Winkelabschnitt (24) verlaufenden Ebene zusammenfällt, und im Bereich der freien Enden (25, 26) der Schenkel (22, 23) des Innenrohres (21) jeweils einen Hohlzylinder (7, 8) bildet, der mit seiner Innenmantelfläche an der Außenmantelfläche (19) des Innenrohres (21) zur Anlage kommen kann. Dieses Spritzwerkzeug zeichnet sich dadurch aus, dassin der Höhlung (3) mindestens ein Zentriermittel (10, 11, 12, 13) vorgesehen ist, das das in die Höhlung (3) eingelegte, nicht umspritzte Innenrohr (21) zumindest im Wesentlichen zentrisch in der Höhlung (3) fixiert.

## Beschreibung

Die Erfindung betrifft ein Spritzwerkzeug zur Herstellung eines Rücklaufrohres, insbesondere für Kraftstoff-Einspritzpumpen bzw. -Injektoren, aus einer durch Spritzen hergestellten Ummantelung auf einem metallenen Innenrohr mit insbesondere kreisförmigem Durchmesser, das aus zwei geraden Schenkeln und einem diese Schenkel verbindenden Winkelabschnitt aufgebaut ist und an den freien Enden der geraden Schenkel nicht umspritzt ist, wobei das Spritzwerkzeug eine formgebende Höhlung mit zwei Schenkelbereichen zur Aufnahme der zu umspritzenden Schenkel des Innenrohres und einen diese Schenkelbereiche verbindenden Winkelbereich zur Aufnahme des zu umspritzenden Winkelabschnitts des Innenrohres aufweist, aus mindestens zwei Teilen aufgebaut ist, zwischen denen im Bereich des Höhlung eine Trennebene verläuft, die mit der von dem Innenrohr im eingelegten Zustand aufgespannten, mittig durch die Schenkel und den Winkelabschnitt verlaufenden Ebene zusammenfällt, und im Bereich der freien Enden der Schenkel des Innenrohres jeweils einen Hohlzylinder bildet, der mit seiner Innenmantelfläche an der Außenmantelfläche des Innenrohres zur Anlage kommen kann.

Rücklaufrohre der hier in Rede stehenden Art werden bei Kraftstoff-Einspritzpumpen und insbesondere bei Common Rail Piezo Injektoren eingesetzt.

Derartige Rücklaufrohre sind üblicherweise aus einem Innenrohr aus einem Metall, beispielsweise Aluminium oder Edelstahl gefertigt, durch das der Brennstoff, der nicht in den Brennraum injiziert wurde, zurücklaufen kann, beispielsweise in den Tank oder in ein anderes Behältnis.

Das Innenrohr wird üblicherweise mit einem Kunststoffmaterial umspritzt, wobei sich eine Art Mantelrohr aus dem eingesetzten Kunststoff bildet.

Ferner kann das Kunststoff-Mantelrohr mit den verschiedenartigsten Flanschen, Vorsprüngen, Verdickungen etc. ausgestattet sein, die einstückig mit dem Mantelrohr gefertigt sind. Diese Flansche etc. ergeben sich je nach der Art des verwendeten Injektors, in welchen das Rücklaufrohr eingesetzt wird.

Das Innenrohr sollte sich möglichst zentrisch in dem durch Umspritzung gebildeten Mantelrohr befinden. Ferner ist es erforderlich, dass die freien Enden des Innenrohres nicht umspritzt sind, damit das Rücklaufrohr in den Injektor eingesetzt und mit dem Kraftstoff-führenden Leitungssystem der Einspritzpumpe verbunden werden kann. Der Abstand zwischen dem Beginn der Umspritzung beziehungsweise dem Mantelrohr und dem freien Ende des Innenrohres sollte bei den verschiedenen mit Hilfe des Spritzwerkzeuges hergestellten Rücklaufrohren möglichst immer gleich sein. Mit anderen Worten, die Länge des frei liegenden, nicht ummantelten Innenrohres sollte einen möglichst genau definierten Wert besitzen.

Aufgabe der vorliegenden Erfindung ist es daher, ein Spritzwerkzeug, das hier auch als Form bezeichnet wird, bereitzustellen, mit dem es möglich ist, ein umspritztes Rücklaufrohr bereitzustellen, das den oben beschriebenen Anforderungen genügt.

Gelöst wird diese Aufgabe durch die Lehre der Ansprüche.

Das zu umspritzende Innenrohr zur Herstellung des Rücklaufrohres wird in das Spritzwerkzeug beziehungsweise in die Form derart eingelegt, dass die freien, nicht zu umspritzenden Enden der geraden Schenkel des Innenrohres in denjenigen Hohlzylindern zu liegen kommen, die von dem Spritzwerkzeug gebildet werden. Diese Hohlzylinder liegen jeweils am Ende der Höhlung.

Würde, wie dies erfindungsgemäß vorgesehen ist, kein Zentriermittel in der Höhlung für das zu umspritzende Innenrohr vorhanden sein, dann wäre das Innenrohr lediglich an seinen beiden freien Enden auf eine gewisse Art und Weise in den oben beschriebenen Hohlzylindern fixiert. Diese Halterung ist jedoch nur bedingt in der Lage, das Innenrohr zumindest im Wesentlichen zentrisch in der Höhlung zu halten, so dass das nach dem Umspritzen erhaltene Mantelrohr, in Umfangsrichtung betrachtet, überall die gleiche Dicke aufweist. Ohne ein erfindungsgemäßes Zentriermittel würde das Innenrohr quasi schwebend durch die beiden Haltepunkte an den freien Enden der geraden Schenkel im Raum beziehungsweise in der Höhlung gehalten.

Bei dem erfindungsgemäß eingesetzten Zentriermittel kann es sich um jedes geeignete Mittel handeln, welches das zu umspritzende Innenrohr zentrisch in der Höhlung hält. Bei einem derartigen Zentriermittel kann es sich beispielsweise um eine Rippe, beispielsweise eine sich in Längsrichtung oder in Querrichtung erstreckende Rippe, handeln, die sich von der Wandung der Höhlung nach innen erstreckt und an der Außenmantelfläche des Innenrohres anliegt.

Nach einer bevorzugten Ausführungsform handelt es sich bei dem Zentriermittel jedoch um einen Zentrierstift, der sich von der Wandung der Höhlung in Richtung des Radius des Innenrohres in diese Höhlung erstreckt. Der Zentrierstift erstreckt sich dabei insbesondere senkrecht zur Trennebene von der Wandung der Höhlung.

Ein derartiger Zentrierstift hat folgenden Vorteil. Die Anlagefläche der Spitze des Zentrierstiftes an der Außenmantelfläche des Innenrohres kann klein ausgestaltet sein. Daher ist die freiliegende Metallfläche nach der Fertigung der Ummantelung beziehungsweise nach der Umspritzung äußerst klein und gering. Mit anderen Worten, in der Ummantelung findet sich nur eine Art sich radial erstreckender zylindrischer Ausnehmung mit geringem Durchmesser. Der Rest der Außenmantelfläche des Innenrohres ist vollständig umspritzt und schützt das Rücklaufrohr.

Dieser Zentrierstift ist vorzugsweise im Winkelbereich der Höhlung angeordnet. Auf diese Weise stützt der Zentrierstift das zu ummantelnde Innenrohr optimal ab. Die Trennebene des erfindungsgemäßen Spritzwerkzeugs verläuft zweckmäßigerweise derart, dass sie die Höhlung in zwei gleiche Hälften unterteilt. Mit anderen Worten, das Spritzwerkzeug ist in einer Ebene getrennt, die mit derjenigen Ebene zusammenfällt, welche durch den Winkel und die Schenkel des Innenrohres aufgespannt wird. In dieser Ebene liegen somit die Längsmittelachse der beiden Schenkel und die Mittelachse des Winkelabschnitts des Innenrohres. Die beiden Schenkel bilden vorzugsweise einen Winkel von 90°.

Nach einer weiterhin bevorzugten Ausführungsform handelt es sich bei dem Zentriermittel einerseits um zwei Fixierstifte und andererseits um einen Ausrichtstift. Die Fixierstifte sind in der Höhlung in einem Schenkelbereich vorgesehen. Diese Fixierstifte erstrecken sich von der Wandung der Höhlung parallel zueinander sowie senkrecht zur Trennebene in diese Höhlung. Zudem sind sie derart voneinander beabstandet, dass das Innenrohr zwischen diese Fixierstifte eingelegt werden kann.

Der Ausrichtstift ist in der Höhlung im anderen Schenkelbereich vorgesehen und erstreckt sich ebenfalls von der Wandung der Höhlung senkrecht zur Trennebene in diese Höhlung derart, dass er an der äußeren Außenmantelfläche des Innenrohres zu liegen kommt. Unter der äußeren Außenmantelfläche wird dabei diejenige verstanden, die sich nicht im von den beiden Schenkeln eingeschlossenen Bereich, sondern außen davon befindet.

Der Abstand der beiden Fixierstifte ist vorzugsweise derart bemessen, dass das Innenrohr unter Herstellung einer Art Reibschluss zwischen diese Fixierstifte einsetzbar ist.

Durch die Fixierstifte wird das eingesetzte Innenrohr mittig im dazugehörigen Schenkelbereich der Höhlung gehalten. Durch den Ausrichtstift wird erreicht, dass die beiden Schenkel des Innenrohres in eine derartige Lage gebracht werden, dass sie zueinander einen Winkel von möglichst 90° bilden. Sollte das in die Form einzusetzende Innenrohr nicht exakt ausgerichtet sein, so dass die beiden Schenkel des Innenrohres einen Winkel größer oder kleiner als 90° bilden, dann wird das Innenrohr beim Einsetzen in die Form quasi etwas nachgebogen, so dass der Winkel des Innenrohres in dem die in die Höhlung eingesetzten Zustand dann gleichwohl in etwa 90° beträgt.

Die Fixierstifte sind vorzugsweise im Schenkelbereich der Höhlung dort angeordnet, wo sich das freie Ende des zu umspritzenden Schenkels des Innenrohres befindet. Der Ausrichtstift ist im anderen Schenkelbereich in der Nähe des Winkelbereichs und somit in der Nähe des Winkelabschnitts des zu umspritzenden Innenrohres angeordnet.

Gegenstand der Erfindung ist auch ein mit einem Kunststoffmaterial umspritztes und ein metallenes Innenrohr aufweisendes Rücklaufrohr, das mit einem erfindungsgemäßen Spritzwerkzeug erhalten wurde.

Die Erfindung wird im Folgenden anhand nicht maßstabsgetreuer und skizzenhafter Zeichnungen einer bevorzugten Ausführungsform näher erläutert. In den Zeichnungen zeigen:
- Fig. 1: eine perspektivische Ansicht eines Teils eines erfindungsgemäßen Spritzwerkzeuges und eines metallenen Innenrohres zum Einsetzen in die im Spritzwerkzeug ausgebildete Höhlung,
- Fig. 2: eine der Fig. 1 entsprechende Ansicht, jedoch mit in die Höhlung eingesetzten Innenrohr, und
- Fig. 3: eine der Fig. 1 entsprechende Ansicht nach Umspritzen des Innenrohres mit einer Kunststoffummantelung, wobei das Rücklaufrohr aus dem Spritzwerkzeug entnommen ist.

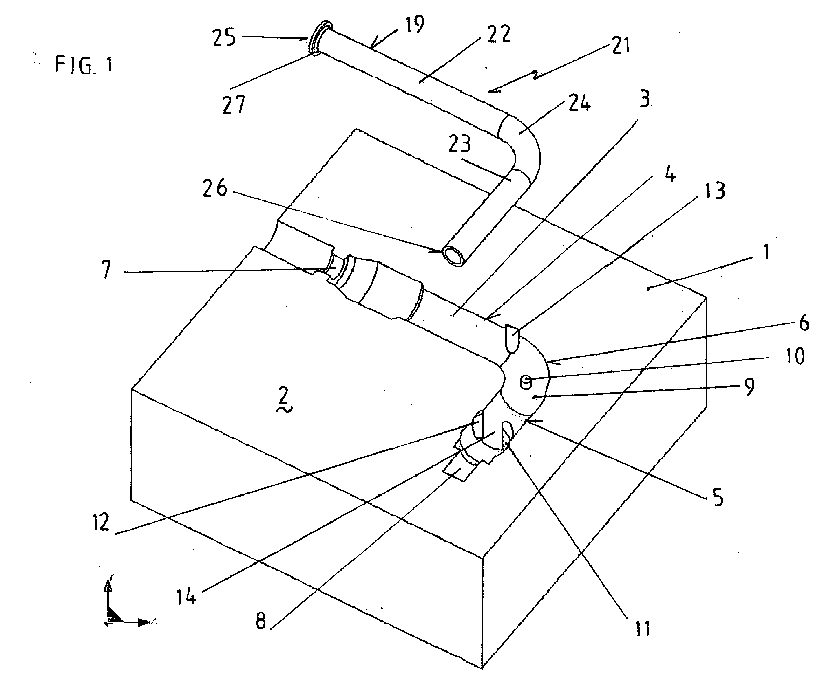

In der Fig. 1 sieht man in perspektivischer Ansicht ein metallenes Innenrohr 21, das aus einem längeren geraden Schenkel 22, einem kürzeren geraden Schenkel 23 und einem diese beiden Schenkel 22, 23 verbindenden Winkelabschnitt aufgebaut ist und einen kreisförmigen Querschnitt besitzt. Die Schenkel 22, 23 sind in einem Winkel von 90° angeordnet, der Winkelabschnitt stellt daher eine Art Vierteilkreis dar. Am freien Ende 25 des geraden Schenkels 22 ist dieser nach radial außen umgefalzt, so dass er einen sich nach radial außen erstreckenden, radial außen umlaufenden Rand beziehungsweise Flansch 27 aufweist.

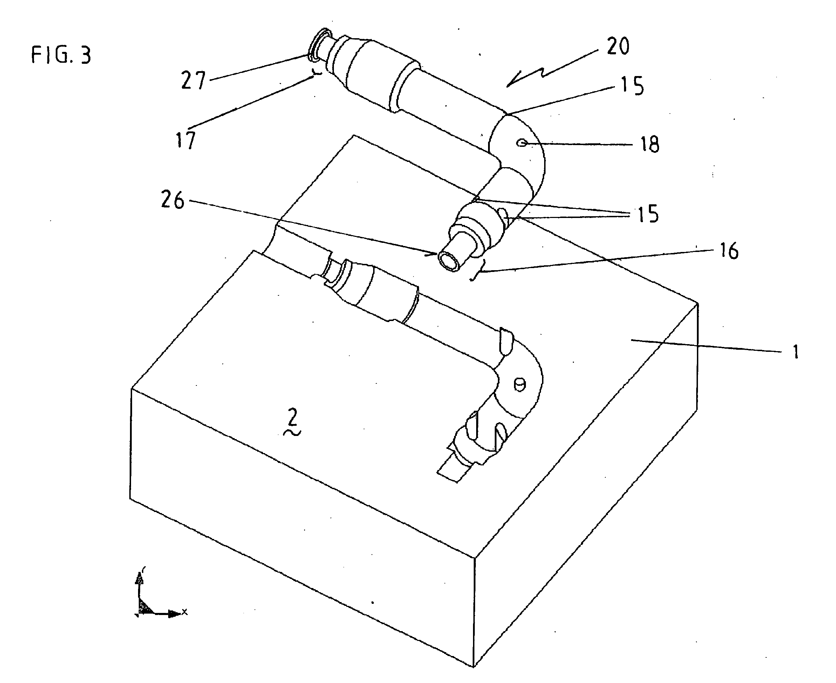

Zum Umspritzen dieses Innenrohres 11 mit einem geeigneten, bekannten Kunststoffmaterial zur Herstellung des in der Fig. 3 gezeigten fertigen Rücklaufrohres 20 dient das erfindungsgemäße Spritzwerkzeug, von dem in der Fig. 1 nur ein Teil 1 gezeigt ist. Das andere Teil dieses Spritzwerkzeuges ist komplementär ausgebildet, so dass beim Aufeinanderlegen der beiden Teile eine Höhlung 3 gebildet wird, welche das zu umspritzende Innenrohr 21 aufnimmt.

Die Trennebene 2 zwischen dem Teil 1 und dem nicht gezeigten Teil des Spritzwerkzeuges ist derart angeordnet, dass sie mit derjenigen Ebene zusammenfällt, die durch die Längsmittellinie der Schenkel 22 und 23 sowie des Winkelabschnitts 24 des Innenrohres 21, wenn dieses zentrisch in der Höhlung liegt, gebildet wird.

Bei dem Teil 1 ist naturgemäß nur die Hälfte der Höhlung 3 dargestellt, da die komplementäre Hälfte in dem anderen, nicht gezeigten Teil des Spritzwerkzeuges ausgebildet ist.

Die formgebende Höhlung 3 des Teils 1 des erfindungsgemäßen Spritzwerkzeuges besitzt einen längeren Schenkelbereich 4 und einen kürzeren Schenkelbereich 5 zur Aufnahme der zu umspritzenden Schenkel 22, 23 des Innenrohres 21 und einen die beiden Schenkelbereiche 4, 5 verbindenden Winkelbereich 6, in dem der Winkelabschnitt 24 des zu umspritzenden Innenrohres 21 zu liegen kommt.

Die Außenkontur des fertigen Rücklaufrohres 20 kann im Übrigen beliebig sein. So können Flansche, verdickte Abschnitte, eingeschnürte Abschnitte etc. vorgesehen sein. Dies ist nicht erfindungserheblich und hängt von den speziellen Anforderungen ab, die an ein derartiges Rücklaufrohr 20 gestellt werden.

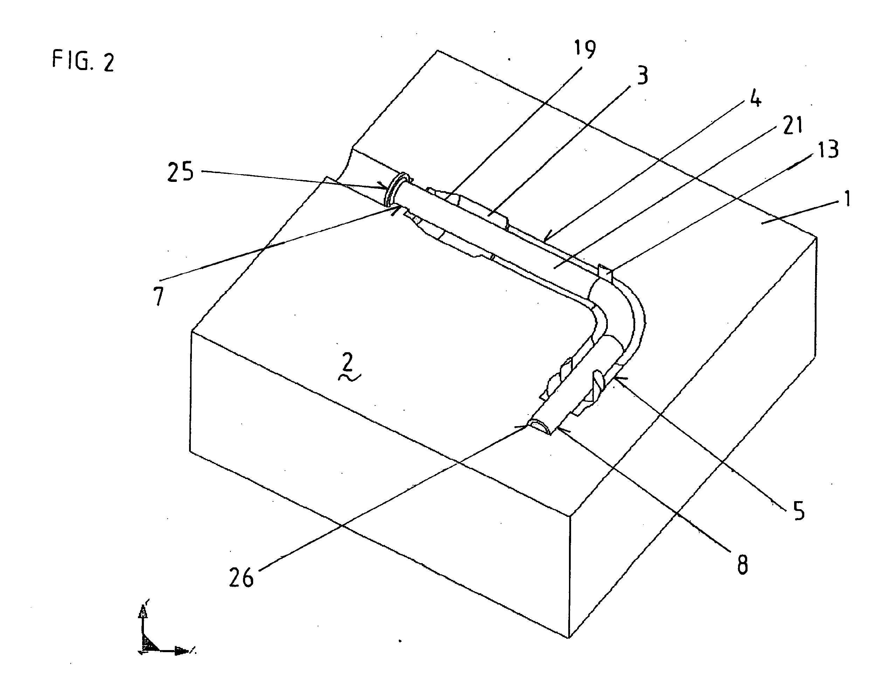

In der Fig. 2 ist derjenige Zustand gezeigt, bei dem das Innenrohr 21 in die Höhlung 3 des Teils 1 des erfindungsgemäßen Spritzwerkzeuges eingesetzt ist.

Die freien Enden 25, 26 der Schenkel 22, 23 des Innenrohres 21 kommen in Hohlzylindern 7, 8 der Höhlung 3 zu liegen. Im Bereich dieser Hohlzylinder 7, 8, die natürlich erst dann entstehen, wenn das Teil 1 des Spritzwerkzeuges mit dem dazu komplementären Teil zusammengesetzt ist, liegen mit ihrer Innenmantelfläche direkt an der Außenmantelfläche 19 des Innenrohres 21 an, so dass im Bereich der Hohlzylinder 7, 8 keine Ummantelung beziehungsweise Umspritzung erfolgt.

Im Winkelbereich 6 des Hohlraums 3 erstreckt sich von der Wandung 9 (man vergleiche Fig. 1) des Hohlraumes 3 ein Zentrierstift 10 senkrecht zur Trennebene 2 in den Hohlraum 3 hinein. Dieser Zentrierstift 10 befindet sich in etwa mittig im Winkelbereich 6 und somit im Winkelabschnitt 24 des Innenrohres 21, wenn dieses in den Hohlraum 3 eingelegt ist.

Der Zentrierstift 10 erstreckt sich dabei vom tiefsten Punkt (bezogen auf die Trennebene 2) der Höhlung 3 senkrecht nach oben und somit senkrecht zur Trennebene 2. Die Länge dieses Zentrierstiftes 10 ist derart bemessen, dass seine Spitze, die bei eingelegtem Innenrohr 21 an der Außenmantelfläche 19 im Winkelabschnitt 24 anliegt, das Innenrohr 21 mittig und zentrisch in der Höhlung 3 hält.

Dem Zentrierstift 10 gegenüberliegend befindet sich im zweiten Teil des erfindungsgemäßen Spritzwerkzeuges ein ähnlich ausgestalteter Zentrierstift (in den Zeichnungen nicht dargestellt), so dass beide Zentrierstifte 10 das Innenrohr 21 derart halten, dass es in der Trennebene 2 liegt. Mit anderen Worten, die durch die Längsmittellinien beziehungsweise Längsachsen der Schenkel 22, 23 und des Winkelabschnitts 24 aufgespannte Ebene fällt mit der Trennebene 2 zusammen. Das Innenrohr 21 wird durch die Zentrierstifte 10 im Bereich des Winkelabschnitts 24 daran gehindert, sich unter diese Trennebene 2 abzusenken oder sich nach oben über diese Trennebene 2 zu bewegen, bezogen auf die in der Fig. 1 gezeigte Trennebene 2.

Im Schenkelbereich 5 der Höhlung 3 ist das erfindungsgemäße Spritzwerkzeug zudem mit zwei Fixierstiften 11, 12 ausgestattet, die voneinander beabstandet sind und sich parallel zueinander von der Wandung der Höhlung in etwa senkrecht zur Trennebene erstrecken. Der Schenkel 23 des Innenrohres 21 wird in den von diesen Fixierstiften 11, 12 gebildeten Spalt 14 eingesetzt. Der Abstand der parallelen Fixierstifte 11, 12 ist dabei derart, dass der Schenkel 23 spielfrei und unter Reibung zwischen diesen Zentrierstiften 11, 12 gehalten wird. Mit anderen Worten, beim Einschieben des Schenkels 23 in diesen Spalt 14 muss eine geringe Kraft aufgewandt werden, um die Reibung zwischen dem Schenkel 23 und den beiden parallel ausgerichteten Zentrierstiften 11, 12 zu überwinden. Weiterhin ist ein Ausrichtstift 13 am Übergang zwischen dem Schenkelbereich 4 und dem Winkelbereich 6 angeordnet, der sich ebenfalls von der Wandung der Höhlung 3 senkrecht zur Trennebene 2 in diese Höhlung 3 derart erstreckt, dass er außerhalb des von den Schenkelbereichen 4, 5 gebildeten Winkels an der Außenmantelfläche 19 des Schenkels 22 des Innenrohres 21 in Anlage kommt.

Der Ausrichtstift 13 wirkt mit den Zentrierstiften 11, 12 zusammen und bewirkt, dass die Schenkel 22, 23 des eingelegten Innenrohres 21 einen Winkel von 90° bilden. Es kommt nämlich des öfteren vor, dass die Schenkel 22, 23 des Innenrohres 21 nicht genau in einem Winkel von 90° zueinander ausgerichtet sind. Beim Einlegen des Innenrohres in die Höhlung findet quasi eine Art Nachbiegung statt, so dass die Schenkel 22, 23 des eingelegten Innenrohres 21 gleichwohl einen Winkel von 90° bilden.

Die Fixierstifte 11, 12 und der Ausrichtstift 13 ragen im Übrigen über die Trennebene 2 des Teils 1 hinaus. Damit diese Stifte 11, 12, 13 das Aufsetzen des zweiten Teils und somit das Schließen der Form nicht behindern, sind sie an ihren Spitzen abgerundet, sodass sie nach dem Schließen an die Wandung des gegenüberliegenden Teils anliegen bzw. angepasst sind. Es ist auch möglich im dem zum Teil 1 komplementären Teil, das auf dieses Teil 1 aufgesetzt wird, entsprechende

Ausnehmungen (nicht gezeigt) aufweist, in welche die Fixierstifte 11, 12 und der Ausrichtstift 13 im zusammengesetzten Zustand hineinragen.

Die Stifte 11, 12, 13 erstrecken sich im Übrigen nicht vom tiefsten (bezogen auf die Trennebene 2) Punkt der Höhlung 3 in Richtung des Radius des Innenrohres 21 sondern quasi am Rand der Höhlung 3, so dass sie tangential außen an dem Innenrohr 21 anliegen.

Durch die Zentriermittel in Form des Zentrierstiftes 10, der Fixierstifte 11, 12 und des Ausrichtstiftes 13 wird weiterhin erreicht, dass die Schenkel 22, 23 des eingelegten Innenrohres sich nicht in Längsrichtung verschieben beziehungsweise im verschobenen Zustand eingesetzt sein können. Auf diese Weise wird sichergestellt, dass die Länge der nicht umspritzten Bereiche 16, 17 an den freien Enden 26, 27 der Schenkel 22, 23 des Innenrohres 21 (man vergleiche Fig. 3) eine möglichst definierte Länge besitzen. Die Schenkel 22, 23 des Innenrohres 21 sind nicht mehr in Richtung ihrer Längsachse verschiebbar, so dass die definierte Länge der Bereiche 16, 17 sichergestellt wird.

Das Innenrohr 21 wird zweckmäßigerweise zuerst mit dem geraden Schenkel 22 in die Höhlung 3 eingesetzt, sofern dieses Einsetzen manuell erfolgt, wobei der andere Schenkel 23 etwas schräg zur Trennebene 2 verläuft und somit etwas "schräg nach oben" zeigt. Sobald der gerade Schenkel 22 am gewünschten Ort ist, wird das Innenrohr 22 um die Längsachse des Schenkels 22 verschwenkt. Dabei kommt der gerade Schenkel 23 in den Spalt 14 zwischen den Fixierstiften 11, 12 und wird erforderlichenfalls auf einen Winkel von 90° beim weiteren Hineinschieben in den Spalt 14 ausgerichtet. Beim maschinellen Einsetzen erfolgt dies jedoch planparallel zur Trennebene 2.

Beim Einsetzen des Innenrohres 21 gleitet dieses an den Stiften 11, 12, 13 entlang und wird auf 90° ausgerichtet wird. Dieser Vorgang wird dadurch erleichtert, dass das Innenrohr 21 außen gewölbt ist.

Die Stifte 10, 11, 12 und 13 besitzen eine zylindrische seitliche Außenmantelfläche, wobei die Längsachse dieses virtuellen Zylinders senkrecht zur Trennebene 2 verläuft.

Bei dem fertigen, umspritzten Rücklaufrohr 20 (Fig. 3) sind aufgrund der geringen Abmessungen der genannten Stifte nur klein dimensionierte Einkerbungen 15 beziehungsweise Löcher 18 vorhanden.

### BEZUGSZEICHENLISTE

- 1: Teil
- 2: Trennebene
- 3: Höhlung
- 4: Schenkelbereich der Höhlung (längerer)
- 5: Schenkelbereich der Höhlung (kürzerer)
- 6: Winkelbereich
- 7: Hohlzylinder
- 8: Hohlzylinder
- 9: Wandung
- 10: Zentrierstift
- 11: Fixierstift
- 12: Fixierstift
- 13: Ausrichtstift
- 14: Spalt
- 15: Einkerbung
- 16: nicht umspritzter Bereich
- 17: nicht umspritzter Bereich
- 18: Loch
- 19: Außenmantelfläche des Innenrohres 21
- 20: Rücklaufrohr
- 21: Innenrohr
- 22: gerader Schenkel des Innenrohres (längerer)
- 23: gerader Schenkel des Innenrohres (kürzerer)
- 24: Winkelabschnitt des Innenrohres
- 25: freies Ende des Innenrohres
- 26: freies Ende des Innenrohres
- 27: Flansch

## Patentansprüche

1. Spritzwerkzeug zur Herstellung eines Rücklaufrohres (20), insbesondere für Kraftstoff-Einspritzpumpen, aus einer durch Spritzen hergestellten Ummantelung auf einem metallenen Innenrohr (21) mit insbesondere kreisförmigem Durchmesser, das aus zwei geraden Schenkeln (22, 23) und einem diese Schenkel verbindenden Winkelabschnitt (24) aufgebaut ist und an den freien Enden (25, 26) der geraden Schenkel (22, 23) nicht umspritzt ist,
wobei das Spritzwerkzeug
eine formgebende Höhlung (3) mit zwei Schenkelbereichen (4, 5) zur Aufnahme der zu umspritzenden Schenkel (22, 23) des Innenrohres (21) und einen diese Schenkelbereiche verbindenden Winkelbereich (6) zur Aufnahme des zu umspritzenden Winkelabschnitts (24) des Innenrohres (21) aufweist,
aus mindestens zwei Teilen aufgebaut ist, zwischen denen im Bereich des Höhlung (3) eine Trennebene (2) verläuft, die mit der von dem Innenrohr (21) im eingelegten Zustand aufgespannten, mittig durch die Schenkel (22, 23) und den Winkelabschnitt (24) verlaufenden Ebene zusammenfällt, und
im Bereich der freien Enden (25, 26) der Schenkel (22, 23) des Innenrohres (21) jeweils einen Hohlzylinder (7, 8) bildet, der mit seiner Innenmantelfläche an der Außenmantelfläche (19) des Innenrohres (21) zur Anlage kommen kann,
**dadurch gekennzeichnet, dass**
in der Höhlung (3) mindestens ein Zentriermittel (10, 11, 12, 13) vorgesehen ist, das das in die Höhlung (3) eingelegte, nicht umspritzte Innenrohr (21) zumindest im Wesentlichen zentrisch in der Höhlung (3) fixiert.

2. Spritzwerkzeug nach Anspruch 1,
**dadurch gekennzeichnet, dass**
es sich bei dem Zentriermittel um einen Zentrierstift (10) handelt, der sich insbesondere senkrecht zur Trennebene (2) von der Wandung (9) der Höhlung (3) in Richtung des Radius des Innenrohres (21) in diese Höhlung (3) erstrecket.

3. Spritzwerkzeug nach Anspruch 2,
**dadurch gekennzeichnet, dass**
der Zentrierstift (10) im Bereich des Winkelabschnitts (6) des Innenrohres (21) angeordnet ist.

4. Spritzwerkzeug nach Anspruch 1,
**dadurch gekennzeichnet, dass**
es sich bei dem Zentriermittel einerseits um zwei Fixierstifte (11, 12) handelt, die in der Höhlung (3) in einem Schenkelbereich (5) vorgesehen sind, die sich von der Wandung (9) der Höhlung (3) parallel zueinander sowie senkrecht zur Trennebene (2) in diese Höhlung (3) erstrecken und die derart voneinander beabstandet sind, dass das Innenrohr (21) zwischen diese Fixierstifte (11, 12) eingelegt werden kann, und
um einen Ausrichtstift (13) handelt, der in der Höhlung (3) im anderen Schenkelbereich (4) vorgesehen ist und der sich ebenfalls von der Wandung (9) der Höhlung (3) senkrecht zur Trennebene (2) in diese Höhlung (3) derart erstreckt, dass er an der äußeren Außenmantelfläche (19) des Innenrohres (21) zu liegen kommt.

5. Spritzwerkzeug nach Anspruch 4,
**dadurch gekennzeichnet, dass**
der Abstand der Fixierstifte (11, 12) derart bemessen ist, dass das Innenrohr (21) unter Herstellung eines Reibschlusses zwischen diese Fixierstifte einsetzbar ist.

6. Spritzwerkzeug nach Anspruch 4 oder 5,
**dadurch gekennzeichnet, dass**
die Fixierstifte (11, 12) im Schenkelbereich (5) in der Nähe des freien Endes (26) des zu umspritzenden Schenkels (23) des Innenrohres (21) angeordnet sind, während der Ausrichtstift (13) im anderen Schenkelbereich (4) in der Nähe des Winkelabschnitts (24) des zu umspritzenden Innenrohres (21) angeordnet ist.

7. Spritzwerkzeug nach einem der Ansprüche 4 bis 6,
**dadurch gekennzeichnet, dass**
es mit einem Zentrierstift (10) nach einem der Ansprüche 1 bis 3 ausgestattet ist.

8. Spritzwerkzeug nach einem der vorhergehenden Ansprüche,
**dadurch gekennzeichnet, dass**
es zur Aufnahme eines Innenrohres (21) dient, das am freien Ende (25) eines Schenkels (22) einen sich nach radial außen erstreckenden, radial außen umlaufenden Flansch (27) besitzt.

9. Spritzwerkzeug nach einem der vorhergehenden Ansprüche,
**dadurch gekennzeichnet, dass**
es zur Aufnahme eines Innenrohres (21) mit unterschiedlicher Länge der Schenkel (22, 23) dient.

10. Rücklaufrohr erhalten mit einem Spritzwerkzeug nach einem der Ansprüche 1 bis 9.

## Geänderte Patentansprüche

### Geänderte Patentansprüche gemäss Regel 86(2) EPÜ.

**1.** Spritzwerkzeug zur Herstellung eines Rücklaufrohres (20), insbesondere für Kraftstoff-Einspritzpumpen, aus einer durch Spritzen hergestellten Ummantelung auf einem metallenen Innenrohr (21) mit insbesondere kreisförmigem Durchmesser, das aus zwei geraden Schenkeln (22, 23) und einem diese Schenkel verbindenden Winkelabschnitt (24) aufgebaut ist und an den freien Enden (25, 26) der geraden Schenkel (22, 23) nicht umspritzt ist,
wobei das Spritzwerkzeug
eine formgebende Höhlung (3) mit zwei Schenkelbereichen (4, 5) zur Aufnahme der zu umspritzenden Schenkel (22, 23) des innenrohres (21) und einen diese Schenkelbereiche verbindenden Winkelbereich (6) zur Aufnahme des zu umspritzenden Winkelabschnitts (24) des Innenrohres (21) aufweist,
aus mindestens zwei Teilen aufgebaut ist, zwischen denen im Bereich des Höhlung (3) eine Trennebene (2) verläuft, die mit der von dem Innenrohr (21) im eingelegten Zustand aufgespannten, mittig durch die Schenkel (22, 23) und den Winkelabschnitt (24) verlaufenden Ebene zusammenfällt,
im Bereich der freien Enden (25, 26) der Schenkel (22, 23) des Innenrohres (21) jeweils einen Hohlzylinder (7, 8) bildet, der mit seiner Innenmantelfläche an der Außenmantelfläche (19) des Innenrohres (21) zur Anlage kommen kann, und
in der Höhlung (3) mindestens ein Zentriermittel (10) aufweist, das das in die Höhlung (3) eingelegte, nicht umspritzte Innenrohr (21) zumindest im Wesentlichen zentrisch in der Höhlung (3) fixiert,
**gekennzeichnet durch** weitere Zentriermittel
in Form von zwei Fixierstiften (11, 12), die in der Höhlung (3) in einem Schenkelbereich (5) vorgesehen sind, die sich von der Wandung (9) der Höhlung (3) parallel zueinander sowie senkrecht zur Trennebene (2) in diese Höhlung (3) erstrecken und die derart voneinander beabstandet sind, dass das Innenrohr (21) zwischen diese Fixierstifte (11, 12) eingelegt werden kann, und
in Form eines Ausrichtstifts (13), der in der Höhlung (3) im anderen Schenkelbereich (4) vorgesehen ist und der sich ebenfalls von der Wandung (9) der Höhlung (3) senkrecht zur Trennebene (2) in diese Höhlung (3) derart erstreckt, dass er an der äußeren Außenmantelfläche (19) des Innenrohres (21) zu liegen kommt.

**2.** Spritzwerkzeug nach Anspruch 1,
**dadurch gekennzeichnet, dass**
das Zentriermittel einen Zentrierstift (10) darstellt, der sich insbesondere senkrecht zur Trennebene (2) von der Wandung (9) der Höhlung (3) in Richtung des Radius des Innenrohres (21) in diese Höhlung (3) erstrecket.

**3.** Spritzwerkzeug nach Anspruch 2,
**dadurch gekennzeichnet, dass**
der Zentrierstift (10) im Bereich des Winkelabschnitts (6) des Innenrohres (21) angeordnet ist.

**4.** Spritzwerkzeug nach einem der vorhergehenden Ansprüche,
**dadurch gekennzeichnet, dass**
der Abstand der Fixierstifte (11, 12) derart bemessen ist, dass das Innenrohr (21) unter Herstellung eines Reibschlusses zwischen diese Fixierstifte einsetzbar ist.

**5.** Spritzwerkzeug nach einem der vorhergehenden Ansprüche,
**dadurch gekennzeichnet, dass**
die Fixierstifte (11, 12) im Schenkelbereich (5) in der Nähe des freien Endes (26) des zu umspritzenden Schenkels (23) des Innenrohres (21) angeordnet sind, während der Ausrichtstift (13) im anderen Schenkelbereich (4) in der Nähe des Winkelabschnitts (24) des zu umspritzenden Innenrohres (21) angeordnet ist.

**6.** Spritzwerkzeug nach einem der vorhergehenden Ansprüche,
**dadurch gekennzeichnet, dass**
es zur Aufnahme eines Innenrohres (21) dient, das am freien Ende (25) eines Schenkels (22) einen sich nach radial außen erstreckenden, radial außen umlaufenden Flansch (27) besitzt.

**7.** Spritzwerkzeug nach einem der vorhergehenden Ansprüche,
**dadurch gekennzeichnet, dass**
es zur Aufnahme eines Innenrohres (21) mit unterschiedlicher Länge der Schenkel (22, 23) dient.

**8.** Rücklaufrohr erhalten mit einem Spritzwerkzeug nach einem der Ansprüche 1 bis 7.
